# EUROPEAN PATENT APPLICATION

(11) **EP 1 739 607 A1**
(43) Date of publication of application: **03.01.2007**
(21) Application number: 06010759.6
(22) Date of filing: 24.05.2006
(51) Int. Cl.: G06Q 10/00, G06F 1/00

(54) **System and method for customer support**

(30) Priority: 22.06.2005 US 159509
(71) Applicant: Hewlett-Packard Development Company, L.P., Houston, TX 77070 (US)
(72) Inventor: Sladek, Marjie, Granite Bay, CA 95746 (US); Vaszary, Mark K., Roseville, CA 95678 (US); Nelson, Douglas R., Cameron Park, CA 95682 (US); Tripp, Travis S., Fort Collins, CO 80525 (US); Palacios, Suzanne M., Foresthill, CA 95631 (US); Harmon, Alysia, Roanoke IN 46783-9230 (US)
(74) Representative: Schoppe, Fritz

(57) **Abstract**

A system and method are provided for customer support. The system may include an authentication application 102 configured to receive a user's login. An authentication database 106 can be provided that contains user security information 112 and support contract data 114. The authentication application can identify a support access level based on the user security information as combined with the support contract data from the authentication database. A support application 104 can be configured to supply defined deliverables 116 based on the support access level linked to the support user under the support contract.

## Description

### BACKGROUND

The role of information technology infrastructure has recently moved from the background of business to the front lines. In a similar manner, information technology support services have evolved from a reactive role to a proactive role. With so much riding on the information technology infrastructure, traditional support services delivered using generic Internet web pages or by an anonymous support engineer after a problem has occurred may not necessarily meet the "always-on" requirements of today's mission-critical services.

Electronic sources and generic support web pages are valuable for technical support and allow a software company to spread its resource dollars further. Many technical support problems are quickly resolved through online support or through generic telephone support centers. However, web support may not provide enough information for a support user or actual access to skilled engineers to solve a difficult problem. In addition, the escalation path for problems that call for greater expertise usually ends with a product vendor's engineering division, where engineers have read and write access to source code.

Product support services, as they are used currently, tend to follow the approach of repairing a problem after a failure has occurred. Unfortunately, the "break/fix" approach to support services is outdated and does not reflect the true value that service programs can bring to customers. Pre-emptive, proactive support services, delivered by a comprehensive team of engineers and coordinated by a single, onsite representative who understands the intricacies of a unique system environment can initiate action in anticipation of problems and help optimize system performance before problems actually occur.

A proactive support strategy can be difficult to provide with today's support and online problem solving tools. Any type of support that is provided is costly and needs to be focused to serve the needs of the client. For example, many product vendors have set up support models where the support users or customers have pay for hourly consulting services. These types of support programs tend to encourage the end users to use the support services as little as possible. This in turn leads to more serious problems later on for the computer systems being supported. In addition, a pay-per-hour approach does not customize support services to the needs of the individual customer. Ultimately, an hourly consulting model for support may lead to greater overall product dissatisfaction.

Some electronic support tools and programs allow an end user to subscribe to an electronic customer support for a flat fee. Unfortunately, such a security login provides only one type of electronic support access. In order to obtain specialized customer support, a customer is generally provided with telephone access to generic support engineers, who may then escalate the support as needed or defined by the product vendor.

### BRIEF DESCRIPTION OF THE DRAWINGS

FIG. 1 is a block diagram of a customer support system in accordance with an embodiment;
FIG. 2 is an example chart illustrating possible support relationship contract levels; and
FIG. 3 is flow chart illustrating example operations in a customer support system.

### DETAILED DESCRIPTION

Reference will now be made to the exemplary embodiments illustrated in the drawings, and specific language will be used herein to describe the same. It will nevertheless be understood that no limitation of the scope of the invention is thereby intended. Alterations and further modifications of the elements illustrated herein, and additional applications of the principles of the inventions as illustrated herein, which would occur to one skilled in the relevant art and having possession of this disclosure, are to be considered within the scope of the invention.

A customer support system is provided that provides support tools and services to create a dynamic and tiered link between customers and the technical support resources of a product vendor. Such a technical support system can help ensure that the right technical support resources are applied to the right problem when the need is the greatest.

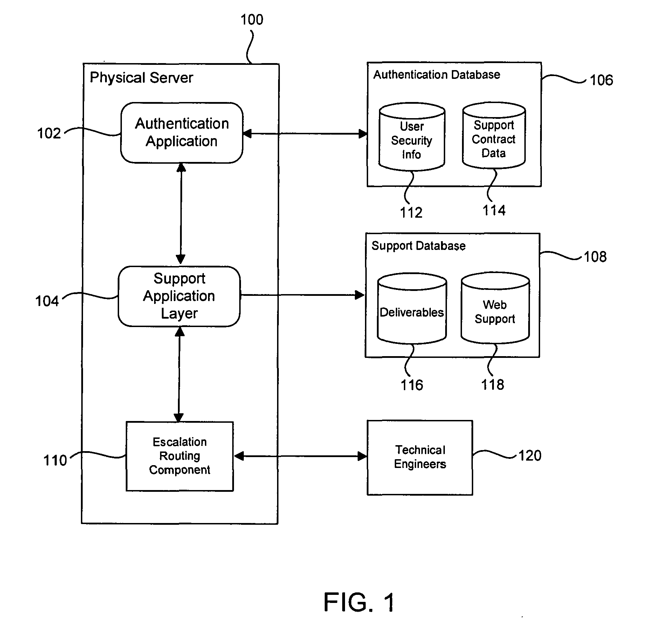

FIG. 1 illustrates an embodiment of a customer support system. In particular, the support system is configured to provide electronic support and engineering personnel contact to a support user or a customer. The system can include an authentication application 102 configured to receive a user's login. The authentication application can also be in communication with an authentication database 106. User security information 112 and support contract data 114 can be contained in the authentication database.

The authentication application 102 can be a web application where a user logins through a support portal. When the user logins in, the authentication application can verify a support access level based on the user security information 112 as combined with the support contract data 114 from the authentication database. The combination of the support contract identification along with the verification of the user identity will determine the level of support that is provided.

The support contract is an agreement entered into with the product vendor. The support contract may be renewed yearly or quarterly and will often include a payment amount based on the level of support that the customer desires. In addition, the support contract can change as the customer's or support user's relationship changes with the product vendor. For instance, the customer may become a partner with the product vendor which would enable them to obtain a higher level of preferred support from the product vendor.

A support application 104 can be configured to supply defined deliverables 116 based on the support access level linked to the user under the support contract. These deliverables can be divided into groups based on the contract level that a support user has paid for and/or agreed to. The deliverables can be generally classified into different groups. The deliverables can include public electronic documents, confidential electronic documents, online support case support, Internet communications specific types of engineering groups, telephone routing to specialized engineering groups, and levels of hardware parts replacement.

The support application 104 can also provide web interfaces for support as defined by the web support levels 118 of defined in the database. Web support can include email interfaces for communications with engineers. Electronic chat programs or instant messaging can be provided for direct electronic access to specific engineers that are available under the contract level under a contract. Other types of live communication tools can be provided such as electronic conferencing tools that include live application sharing, electronic whiteboard capabilities, audio conferencing, and video conferencing.

The customer support system may also include an escalation routing component 110 capable of routing incident information to support personnel or technical engineers 120 based on the support contract data. This routing can take place using electronic communications such as emails, instant messages, or video contact that is directed to specific personnel. In a telephone enabled component, the routing component may provide the phone access to engineering staff who are specifically assigned to solve certain types of problems for support users with a given support contract level. This may occur when a generic support engineer is contacted, then when higher levels of support are needed then the escalation routing component may determine who may be contacted and even make the phone connection to the desired engineer.

A user's support history can also be in the support database 108. This support history may include previous incidents, steps taken for resolution, and similar information. Combining the support contract levels together with user history helps the product vendor to track and audit the service being provided to a given contract level. Accordingly, the support provided to a specific support level can be improved as desired.

There are some reasons that dividing the support levels can aid in the effective distribution of support. Technical support can be more useful to the end user and more cost-effective for the product vendor when specific support deliverables are supplied based on a tiered and contracted relationship with the product vendor. In other words, the product vendor can assure that focused support is being delivered to customers based on their relationship priority and their desire to pay for the support.

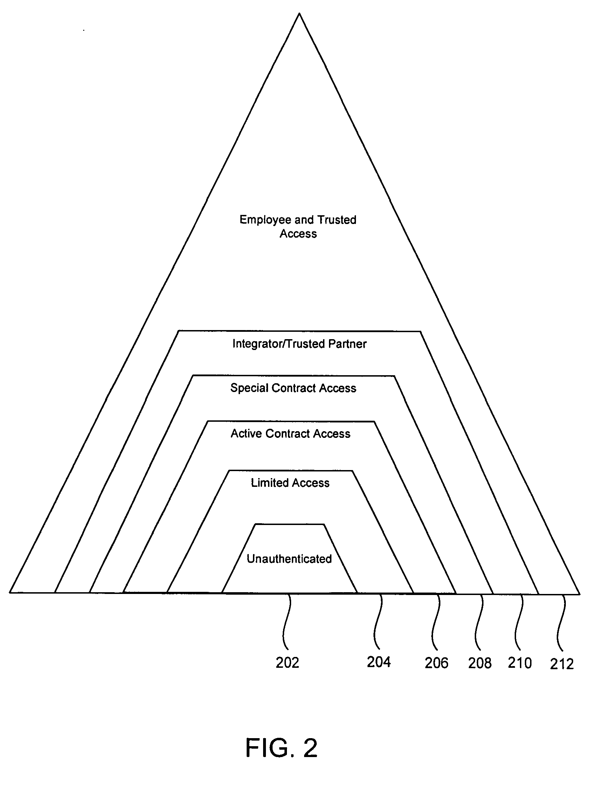

While the partitioning of the actual deliverables for the support levels may vary, FIG. 2 illustrates examples of tiered levels of support for a support user. The level of support where no relationship exists between a support user and the software vendor can include free and public access to documentation such as web pages with technical support cases, driver updates, public software downloads, and similar deliverables. The level where no relationship exists between the support user and the product vendor can also be called unauthenticated support 202 or no cost support.

For a base support level or limited access level 204, the system can provide software manuals and electronic support incidents or phone support incidents with generic support engineers. A second support level or active contract level 206 can include a partnership relationship between the support user and the software vendor. This partnership level of support can include access to partnership support documentation and to partner level engineering support liaisons. For example, special contacts can be designed for partner level support in the support division and the engineering divisions.

A third level of support or special contract access 208 can be provided for system integrators or trusted partners. This level may provide access to detailed technical documents, downloadable components and tools, and access to integration engineers who have experience in integrating products together.

A fourth support level may be a premier support level for system integrators or trusted partners 210. This level can enable access to a much larger set of electronic documentation. Such access can include access to special engineers, high level design documents and immediate response time.

A fifth support level may be an internal support level 212. These individuals are employees, independent contracts, and highly trusted partners. The internal support level can provide access to all the electronic documents, detailed design documents, bug reports, confidential documents. In addition, this high level of support can provide access to engineering support individuals that an employee of the product vendor would have access to.

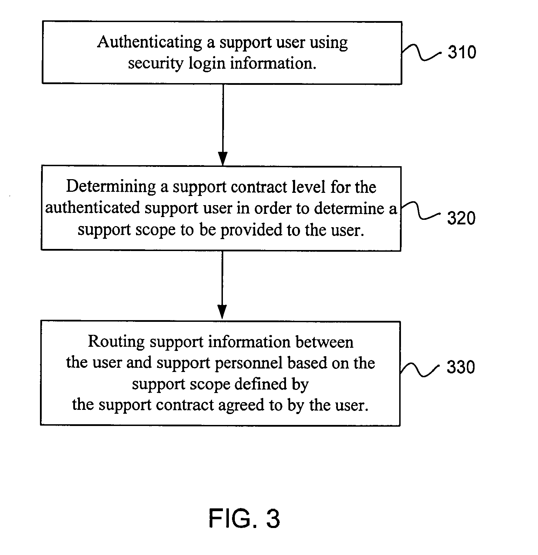

FIG. 3 is a flowchart illustrating an example embodiment of a method for providing configurable customer support. The method can include the operation of authenticating a support user using security login information, as in block 310. This authentication can take place through a web application or another client-server application. Once the actual identity of the support user logging into the support system has been identified, then the amount of contracted support can be determined for the support user.

Another operation in the method is determining a support contract level for the authenticated support user in order to determine a support scope to be provided to the support user, as in block 320. The support contract level can be queried from a support contract database using the support user name(s) associated with a given contract. Individuals or companies who desire support from the product vendor can agree to a support contract when a product is purchased or as agreed upon. In addition, a special type of support contract can be purchased for detailed types of support. For example, a customer can purchase the right to be able to access high-level engineering contacts or certain portions of a product's source code.

However, a support customer cannot necessarily purchase any or all types of support rights they desire to have. One example of this would be the employee rights or trusted partner rights. These support rights may be granted just to employees or individuals who have a trusted and/or confidential relationship with the product vendor. Another example of where such high level access rights can be granted is with a company who is sub-contracted to work on a portion of a vendor's product. Granting such trusted support rights allows a sub-contract or other in trusted roles perform their work more efficiently, but the rights are granted because of their integrated role in the product development or similar trusted relationship.

A further operation in the method can be routing support information and contacts between the user and support personnel based on the support scope defined by the support contract agreed to by the customer or user, as in block 330. This means that multiple types of support deliverables can be filtered for delivery to the support user depending on what type of support contract has been agreed to with the product vendor.

In many instances, purchasing a higher level of contract support will provide access to more electronic documents, communication channels, and engineering personnel resources. Having the support user or customer purchase support deliverables means the support deliverables are produced based on their actual demand by the support users. Since the deliverables are being purchased but support users who need specific support deliverables, then more focus can be applied to the type and quality of the deliverables that are supplied to the support user. For example, electronic web support can provide tiered levels of support that are provided to or purchased by the support user under the support contract. This may include providing different levels of access to web pages, user's manuals, and online documentation. Many generic support items such as web pages with general support issues and users' manuals are likely to be available to the lower levels of contract support.

Another operation that may be included in the method is the operation of routing support calls to defined engineering personnel based on the support contract agreed to by the support user. Examples of types of routed information can include routed emails to selected engineering individuals or routed instant messaging conversations with support representatives or engineers. Voicemail or telephone support can also be routed based on the support scope defined by support contracts.

The routing described may be electronic routing or manual routing. Electronic routing can be the routing of electronic support messages to different support individuals based on the level of support contract the support user has. Manual routing can take place where an engineer is helping a support user with an issue, but the engineer needs to manually escalate the support user's service to a higher support engineer due to the support contract that is in place. In addition, some support contract levels may have direct routing access to special engineering groups or dedicated engineering groups based on the support contract level purchased by the customer.

In one example of routing, the support user may initially have contact with a generic support individual. Generic in this sense means that he covers a wide variety of problems. Then if the problem cannot be quickly solved at that level, then the generic support contact will check the support contract level of the support user. If the level of the support contract is high enough, then the support contact may send the phone call directly to a more specialized engineer. If the level of the support contract is not high enough, then the support user may have less prioritized access to the specialized engineer. For instance, the user may have to wait for the specialized engineer to answer electronic messages or the like.

For some levels of support contracts, confidential technical information can be provided. Examples of confidential technical information may be internal whitepapers, design documents, confidential interface documentation, portions of software source code, hardware schematic diagrams, confidential testing information, and similar sensitive data. Since the product vendor has an interest in protecting such information, this support system helps restrict general access to such information while allowing certain trusted support users to access the confidential information.

Higher software support tiers may have access to a software enhancement request module for customers with a higher level support contract. Support users and customers who have purchased certain contract types or certain product volumes often have insights into how they would like a product to work. Allowing support users to submit improvement suggestions for the product can increase the overall product value as these additional features may be included in the product. The improvement suggestions may also be prioritized based on the contract level of the support user submitting the suggestion.

The embodiments described herein are able to provide a more personalized and proactive support approach. The system and method described is particularly effective in providing support for complex technical products such as high-end software and hardware. For example, these embodiments are beneficial in providing the routing of support that uses highly skilled manpower and the regional availability of support engineers. In addition, a local language interface can be provided that is activated or modified by the contract and routing features of the invention

The use of a tiered support environment with routing capabilities also allows the product vendor to develop solid internal relationships between the product development staff and support organizations within the vendor's organization. Since these relationships can be tracked electronically, this allows the support and engineering organization to evaluate areas where the support is less effective or additional personnel may be needed.

Because the system and method described is networked or web-based, this allows world-class software and hardware support services to be provided using a global network of technical support engineers.

The embodiments described also allow an organization to more closely align with the product development teams so that electronic support-oriented capabilities can be designed directly into the software and hardware products provided to the support user.

Providing an extended history of the support issues under a given contract and a specific contact for the contract helps a vendor's support staff provide strong support and solve tough problems. Depending on the agreement that is arranged with the support users and the problem that exists, the support provided can being with generic levels of support and then escalate to the top technical talent in the vendor's organization in order to solve difficult problems.

It is to be understood that the above-referenced arrangements are only illustrative of the application for the principles of the present invention. Numerous modifications and alternative arrangements can be devised without departing from the spirit and scope of the present invention. While the present invention has been shown in the drawings and fully described above with particularity and detail in connection with what is presently deemed to be the most practical, it will be apparent to those of ordinary skill in the art that numerous modifications can be made without departing from the principles and concepts of the invention as set forth herein.

## Claims

1. A customer support system, comprising:
an authentication application 106 configured to receive a user's login;
an authentication database 106 containing user security information and support contract data, wherein the authentication application identifies a support access level based on the user security information 112 as combined with the support contract data 114 from the authentication database; and
a support application 104 configured to supply defined deliverables 116 based on the support access level linked to the user under the support contract.

2. A customer support system as in claim 1, further comprising an escalation routing component capable of routing incident information to support personnel based on the support contract data.

3. A customer support system as in claim 1, further comprising a support database capable of storing support contract and support history information for a user accessing the support system.

4. A customer support system as in claim 3, further comprising a plurality of customer support contract levels defined in the support database.

5. A customer support system as in claim 1, wherein the customer support contract levels are selected from the group consisting of unauthenticated access, limited special access, active contract access, special contract access, and partner and employee access.

6. A method for providing configurable customer support, comprising the steps of:
authenticating a support user using security login information 310;
determining a support contract level for the authenticated support user 320 in order to determine a support scope to be provided to the support user;
routing support information between the user and support personnel 330 based on the support scope defined by the support contract agreed to by the user.

7. A method as in claim 6, further comprising the step of providing electronic documentation in response to a support contract level agreed to by a user.

8. A method as in claim 6, wherein the routing step further comprises the step of routing support calls to tiered engineering groups based on the support contract level purchased by the customer.

9. A method as in claim 6, further comprising the step of supplying confidential technical information when the support contract level reaches a pre-defined level.

10. A method as in claim 6, further comprising the step of providing access to product manuals and software patches at a lower support contract level.
